# EUROPÄISCHE PATENTSCHRIFT

(11) **EP 0 957 645 B1**
(45) Veröffentlichungstag und Bekanntmachung des Hinweises auf die Patenterteilung: **20.07.2005**
(21) Anmeldenummer: 99109097.8
(22) Anmeldetag: 07.05.1999
(51) Int. Cl.: H04Q 3/00

(54) **Netzelement für ein intelligentes Telekommunikationsnetz**
Network element for an intelligent telecommunications network
Elément de réseau pour un réseau de télécommunication intelligent

(30) Priorität: 08.05.1998 EP 98108449
(43) Veröffentlichungstag der Anmeldung: 17.11.1999
(73) Patentinhaber: SIEMENS AKTIENGESELLSCHAFT, 80333 München (DE)
(72) Erfinder: Simeonov, Plamen, D-10117 Berlin (DE)

(56) Entgegenhaltungen:
- EP-A- 0 830 039
- WO-A-96/31987
- US-A- 5 600 643

## Beschreibung

Die Entwicklung der Fernsprechnetze und die Forderungen des Marktes machte in den letzten Jahren eine immer flexiblere Bereitstellung von Diensten notwendig.
Unter einem Dienst versteht man neben dem Angebot von Übertragungswegen (Basisdienste) weitere ergänzende oder Mehrwertdienste: Dienstleistungen an das Netz und Verbindungen zwischen den Anschlüssen im Netz. Bekannte Dienste sind derzeit beispielsweise der netzintegrierte Anrufbeantworter, Rufumlenkungen (auch zu Ansagen), Anklopfen bei Besetzt, Rückruf bei Besetzt, Gebührenansagen und vieles andere mehr.

Um neue Dienste möglichst schnell, wirtschaftlich und unabhängig von den Herstellern der Netzkomponenten anzubieten, war ein neuer, erweiterter Ansatz zur Erzeugung und Bereitstellung von Telekommunikationsdiensten erforderlich. Dabei sollen bereits in bestehenden Fernsprechnetzen getätigte Investitionen berücksichtigt werden.
Der Lösungsansatz, "Intelligentes Netz" genannt, das Konzept wird in den ITU Normen Q.1200 ff. beschrieben. Typische IN-Dienste sind die einheitliche Rufnummer (One-Number-Service), Abstimmung per Telefon (Televoting) oder virtuelle Netze (VPN, Virtual Private Network).

Das IN-Konzept ist hinsichtlich der Netzkomponenten als auch des Dienstekonzepts modular. Die für die IN-Dienste erforderliche Rufbehandlung ist in voneinander weitgehend unabhängige Funktionsgruppen aufgeteilt.

Die derzeit definierten funktionalen IN-Module (Functional Entities, FE) sind in der ITU-Norm Q.1214: "Distributed Functional Plane for Intelligent Network CS-1" beschrieben. Die wichtigesten sind dabei:
- SSF: Service Switching Function (Dienstzugriffsfunktion),
- SCF: Service Control Function (Dienststeuerungsfunktion),
- SRF: Specialized Resource Function
   (Funktion für besondere Ressourcen, z. B. für Ansagen oder Spracherkennung),
- SDF: Service Data Function (Dienstdatenbankfunktion).

Eine zweite Architektur besteht aus den modularen Netzkomponenten, die ein Intelligentes Netz enthalten soll. Die Realisierung beinhaltet dann die Zuordnung der logischen (Funktions-)Module zu den konkreten Netzkomponenten.
Diese kann von der konventionellen Aufteilung auf die unterschiedlichen Netzkomponenten (SCP, SSP, SMP) bis hin zu einem multifunktionalen Netzelement reichen, einen sogenannten "Service Node", welcher optional alle Funktionsmodule enthalten kann.

Der Nachteil dieses Ansatzes ist die starre Architektur, je nachdem wie die Verteilung der Funktionsmodule auf die einzelnen Netzelemente geplant ist. Die Planung muß den schlimmsten Fall voraussetzen (worst-case scenario), was eine sehr großzügige Dimensionierung der einzelnen Netzelemente verlangt.

Aus der europäischen Patentanmeldung EP 0 830 039 A1 ist ein Netzelement in Form eines Dienstesteurungspunktes SCP bekannt, welches über eine Schnittstelle mit einem Dienstevermittlungspunkt SSP verbunden werden kann. Eine Triggerdaten enthaltende Tabelle ist zwischen dem Dienstesteuerungspunkt und dem Dienstevermittlungspunkt aufgeteilt. Bei Initiierung eines Rufes überträgt der Dienstesteuerungspunkt einen Teil der Tabelle an den Dienstevermittlungspunkt.

Aufgabe der Erfindung ist es, die obengenannten Nachteile zu vermeiden.

Diese Aufgabe wird gelöst durch ein Netzelement gemäß Patentanspruch 1 und durch ein Telekommunikationsnetz gemäß Patentanspruch 6.

Erfindungswesentlich ist dabei, daß die Netzelemente verschiedene Funktions-Module beinhalten und deshalb unterschiedliche Funktionalitäten ausführen können. Dabei müssen diese Funktionalitäten entweder während der Laufzeit aktivierbar und deaktivierbar sein oder die Funktionsmodule zwischen den einzelnen Netzelementen ausgetauscht werden, je nach Bedarf.

Der Vorteil dieses erfindungsgemäßen Vorgehens liegt darin, daß die Dimensionierung der einzelnen Netzelemente so gesteuert werden kann, daß sie den aktuellen Anforderungen angemessen sind. Es muß kein schlimmster Fall ermittelt werden, welcher durch die Einrichtungen abgedeckt werden muß und somit werden keine für den Normalfall überdimensionierten Netzelemente geschaffen.

Vorteilhafte Ausgestaltungen und Weiterbildungen sind in den Unteransprüchen angegeben.

Die Netzelemente können durch den Wechsel der Funktions-Module unterschiedliche Betriebs-Modi ausführen. Dabei kann er auch mehrere Modi gleichzeitig einnehmen, gegenüber verschiedenen oder dem gleichen Netzelement.

Als Betriebsmodus werden folgende drei vorgeschlagen:
- Unabhängig, Independent (Server),
- Abhängig, Dependent (Client),
- Autonom, Autonomous (Agent).

Das neue Modell bietet einen einheitlichen und strukturierten Ansatz für ein Intelligentes Netz. Erweiterungen, neue Dienste und neue Versionen können schnell eingebracht werden.

Im folgenden wird die Erfindung anhand von Ausführungsbeispielen erläutert. Dabei zeigen
Figur 1a und 1b jeweils eine Verteilung von Funktionsmodulen auf Netzelemente für einen Telekommunikations-Dienst, am Beispiel des Dienstes "One Number Service" (Stand der Technik),
Figur 2a ein Netzelement mit optionalen Modulen, ein "Service Node",
Figur 2b zwei miteinander verbundene Netzelemente nach Figur 2a,
Figur 3 in verschiedenen Modi arbeitende Netzelemente, und
Figur 4 eine beispielhafter Aufbau des Netzelementes mit zusätzlichen Internet-Funktionalitäten.

Der sogenannte "One Number Service" unterstützt mehrere Zielrufnummern unter einer einheitlichen Telefonnummer. So kann ein A-Teilnehmer (also der Anrufende) mit unterschiedlichen Endgeräten, wie Telefon, Fax, PC etc. einen B-Teilnehmer unter einer einzigen Nummer erreichen.

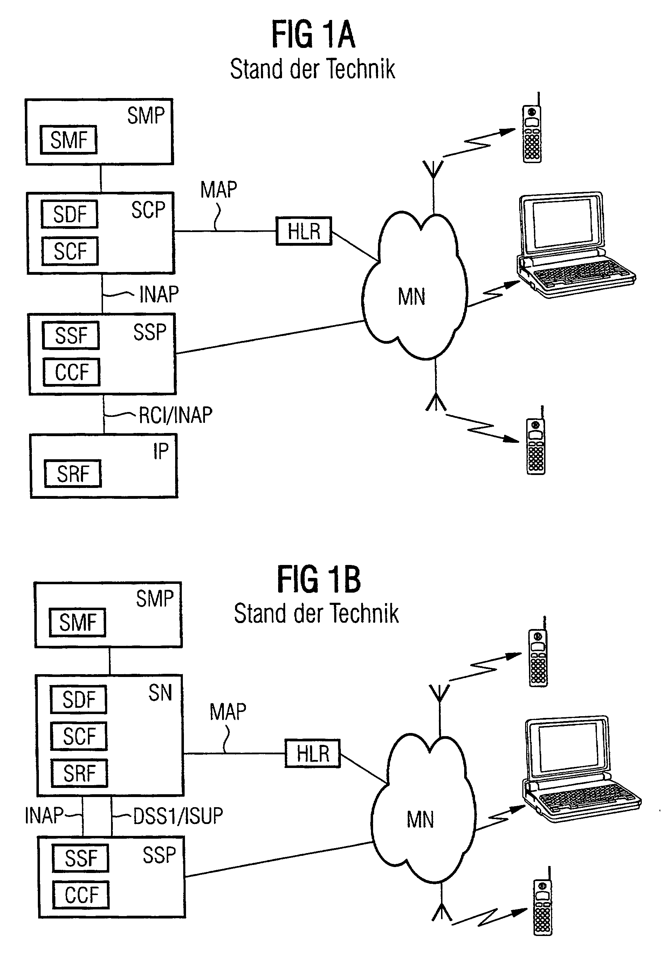

Figur 1a zeigt nun einen Aufbau der Netzelemente in klassischer IN-Architektur. Hierfür werden die folgenden Netzelemente benötigt:
- SMP: Service Management Point, Dienstebediensystem
   Unterstützung von Betrieb und Wartung des IN Systems, insbesondere Bereitstellung und Steuerung der IN-Dienste,
   realisiert durch die Service Management Function SMF, die die Dienstprogramme und die zugehörigen Ressourcen verwaltet.
- SCP: Service Control Point, Dienstezentrale
   Bereitstellung von IN-Diensten, Auslagerung der dienstespezifischen Daten und Steueranweisungen, realisiert durch die Service Control Function SCF, das das IN-Diensteprogramm aus, welches zu einem Dienstewunsch gehört,
   und die Service Data Function SDF, welche die dienstespezifischen Daten speichert und verwaltet.
- SSP: Service Switching Point, IN-fähige Vermittlungsstelle Herstellen von Verbindungen zwischen Kommunikationsendpunkten mittels Nutzkanäle, Erkennung von IN-Rufen realisiert durch die Service Switching Function SSF, welche die Schnittstelle zur SCF darstellt,
   und die Call Control Function CCF, welche die Erstbehandlung des Dienstaufrufwunsches durchführt.
- IP: Intelligent Peripheral, Vermittlungszusatzeinrichtung wird dem SSP bei Bedarf zugeordnet, nutzkanalorientierte Fähigkeiten, wie Sprachansagen, Frequenzwahlauswertung etc.
   mit der Special Resource Function SRF.

In dem in der Figur dargestellten Fall wird der Dienst in einem Mobilfunknetz MN angeboten, mit dem zugehörigen Teilnehmerregister HLR (Home Location Register). Die Kommunikation erfolgt mit Hilfe der üblichen Protokolle
Intelligent Network Application Part INAP, und Mobile Application Part MAP.

Figur 1b stellt eine zweite Realisierungsmöglichkeit für den selben Dienst "One Number Service" dar. Der wesentliche Unterschied zu Figur 1a liegt in der Lokalisierung der Special Resource Function SRF, die sich diesmal nicht in einem seperaten Intelligent Peripheral befindet, sondern bei der SCF und SDF in dem ehemaligen SCP, jetzt Service Node SN genannt. Damit wird deutlich, daß die Verteilung der Funktions-Module nicht starr ist, sondern variabel definiert sein kann und dadurch den Anforderungen besser angepaßt ist.

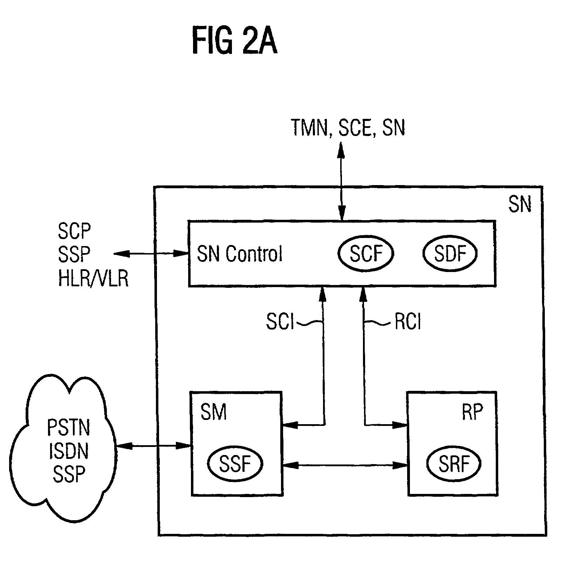

Ein Netzelement SN (Service Node), welches verschiedene Funktionalitäten übernehmen kann, ist in Figur 2a dargestellt.
Die 3 Hauptmodule, SN Control, Switching Matrix SM und Resource Platform RP können in unterschiedlichen Kombinationen aktiv bzw. vorhanden sein.
Die Aufgaben, die von den Hauptmodulen übernommen werden, sind dementsprechend abhängig davon, welche Hauptmodule vorhanden sind.

SN Control SNC entspricht der Funktionalität des SCP, (enthaltend SDF und SCF). Nach ,außen' existieren bekannte Schnittstellen zu anderen Netzelementen SN, Management-Einheiten TMN und zur Diensteentwicklung SCE.
Weiterhin stellt der SN Schnittstellen zu herkömmlichen IN Netzelementen bereit: zu SSP, SCP und HLR/VLR über CCS7 (Common Channel Signaling System No. 7) und INAP bzw MAP.
Intern besteht eine Schnittstelle zu den beiden anderen Modulen: das Switch Control Interface SCI und RP Control Interface RCI zu der / den Resource Platform/s RP, von denen mehrere existieren können.

Die Funktionalität der Resource Platform RP entspricht der des Intelligent Peripheral IP, enthaltend die SRF. Sie übernimmt die Aufgabe der Vervollständigung der Dienste, enthält Dienstfeatures und Makros.

Die Switching Matrix SM bietet weitere Schnittstellen nach außen: zu weiteren (auch IN-fähigen) Vermittlungsstellen SSP, in unterschiedlichste Telekommunikationsnetze, wie Public Switched Telephone Network, öffentliches Fernsprechwählnetz PSTN oder Integrated Services Digital Network, Diensteintegrierendes digitales Nachrichtennetz ISDN. Die Kommunikationsprotokolle an diesen Schnittstellen sind die bereits bekannten INAP, CCS#7 etc.

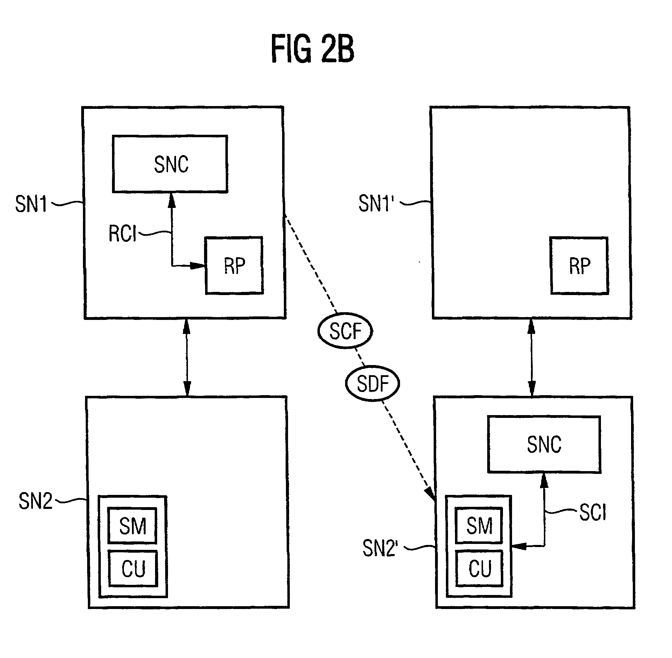

Figur 2b zeigt 2 Netzelemente der in 2a beschriebenen Art SN1 und SN2. Das erste Netzelement enthält die Funktionalitäten SNC und RP (also entsprechend SCP und IN), das zweite Netzelement die Switching Matrix SM und eine Conferencing Unit CU. Die beiden Netzelemente sind miteinander verbunden.

Durch Anforderung oder Vermittlung werden im laufenden Betrieb die Funktionsmodule SCF und SDF, also die Service Control Function von dem ersten Netzelement SN1 an das zweite Netzelement SN2' übergeben (bzw. deaktiviert und aktiviert). Dieses kann abhängig sein von dem im Netz vorhandenen Verkehr, entstehenden Kosten oder Qualitäts-Anforderungen (QoS).

So kann ein Netzelement SN abhängig von dem auszuführenden Dienst weitere Funktions-Module benötigen:
Rufnummern-Umsetzung (Number Translation): SCF + SDF
Spracherkennung: SCF + SDF + SRF
Lokaler Operator: SCF + SDF + SRF + SSF
Internet-Telefonie: SCF + SDF + SRF + SSF + Gateway-Funktionalitäten.

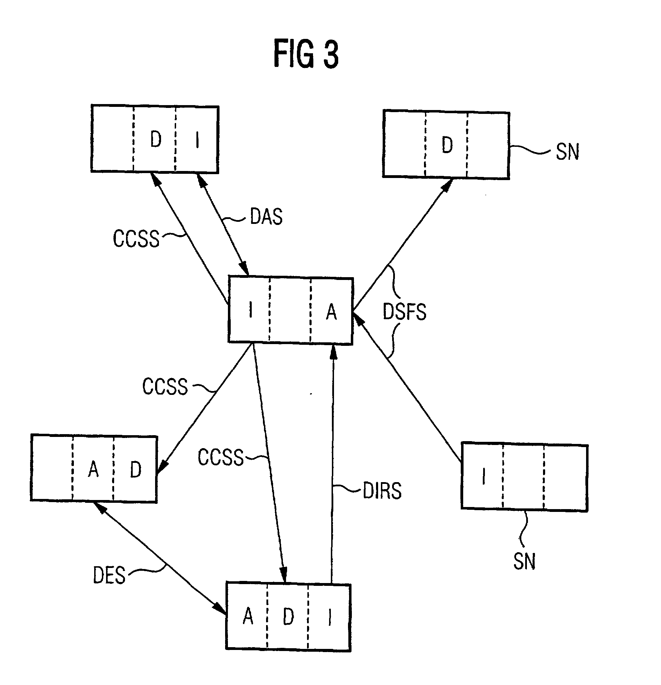

In Figur 3 sind die Netzelemente SN dargestellt, die in verschiedenen Operationsmodi arbeiten: I für Independent (unabhängig), D für Dependent (abhängig) und A für Autonomous. Die Zusammenhänge zwischen den einzelnen Netzelementen SN sind durch die Pfeile charakterisiert.
- Dual Availabilty Subnetwork DAS zwischen zwei Netzelementen, die beide im ,Independent Modus' arbeiten, sich gleichberechtigt eine Aufgabe teilen,
- Centralized Client/Server Subnetwork CCSS, wobei ein Netzelement als Server Sv arbeitet und die anderen abhängig als Clients Cl,
- Duplex Exchange Subnetwork DES, beide arbeiten autonom, als Agents Ag, und tauschen Informationen aus,
- Distributed Information Retrieval Subnetwork DIRS,
- Distributed Store & Forward Subnetwork DSFS, ein Agent sammelt von Servern Informationen ein und gibt sie an einen Client weiter.

Zwei Anwendungsbeispiele werden im folgenden noch kurz angesprochen, Realisierungsmöglichkeiten beispielsweise für Video-on-Demand, bei dem größere Datenmengen von einem zentralen Server durch das Netz transportiert werden.

Ein Zentralisiertes Netz.

Signalisierung und Steuerung werden zentral durchgeführt. Die Übertragung wird über synchron über einen Übertragungskanal oder asynchron gepuffert. Wenn das zentrale System ausfällt, werden alle Übertragungen unterbrochen, bis ein Ersatz bereit steht.
Durch die erfindungsgemäßen Netzelemente kann eine zentralisiertes IN Netz repräsentiert werden, 3 Netzelemente werden benötigt:
- ein Media Server (Independent Mode)
- ein Media Terminal Client (Dependent Mode) und
- ein Control Point Server/Client (I/D Mode).

Hoch verfügbar wird die Architektur (mit einem zweiten SCP) durch folgende Netzelemente: zwei weitere Server/Client/Agent Netzelemente und zwei Server/Agent Elemente.

Ein Verteiltes Netz.

Der selbe Video-on-Demand Dienst kann auch in einem verteilten System realisiert werden. Dadurch werden Kommunikationskosten gespart und die Zuverlässigkeit wird erhöht. Ein zentraler Server hilft Speicherkosten zu sparen. Die Daten können off-line heruntergeladen und regelmäßig aktualisiert werden.
Hier gibt es mit Hilfe der erfindungsgemäßen Architektur zahlreiche Realisierungsmöglichkeiten, zum Beispiel:
- ein Server (Independent Mode)
- ein Client (Dependent Mode)
- ein Agent (für SCF und SMF Funktionalitäten, für die Lokalisierung und Leitung des verteilten Dienstes).

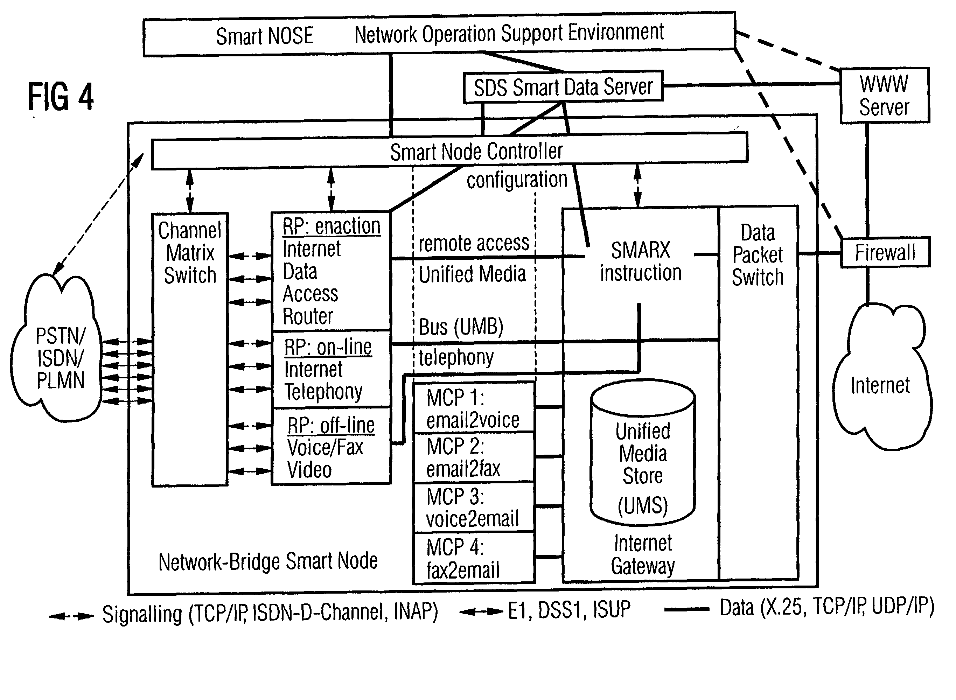

Figur 4 illustriert die Verwendung des erfindungsgemäßen Netzelementes in einer Internet-Umgebung, als Bridge.
Der Service Data Server SDS enhält alle Teilnehmer- und Dienstspezifischen Daten, so wie Dienstkonfigurationen und Benutzerprofile, er entspricht der SDF.
Über die Schnittstelle NOSE erhält man Zugriff auf das Netzelement, z. B. über remote control Sessions über UNIX-Web-Hosts (WWW-Server zum Internet) oder ein SNMP-basiertes Management.
Über den WWW-Server kann ein externes Management der Netzelemente durchgeführt werden (entsprechens SMP bei IN), sowie Customer Service Control, etwa die Konfiguration von Dienstspezifischen Parametern über das Internet, bei Verwendung von bekannten Sicherheitsprotokollen. Über eine Firewall ist die Management vom Internet gegen unzulässige Zugriffe abgeschirmt.

Der SNC (auch SC in vorhergehenden Figuren) verwaltet die Ressourcen und ist verantwortlich für den Operationsmodus des Netzelementes.
Das Netzelement (die Bridge selber) enthält außerdem zusätzlich zu dem sog. Channel Matrix Switch (SM in den vorhergehenden Figuren), welche die Schnittstellen zum leitungsvermittelten Netz (PSTN, ISDN, PLMN) ist und auch Routing-Funktionen übernehmen kann, weiterhin besondere Ressource Funktionen (RP in den vorherigen Figuren). Diese enthalten in dem geschilderten Fall spezielle Zugriffsfunktionen für das Internet sowie Medien-Konverter (etwa für Voice-over-IP Telefonie, die Umsetzung von leitungsvermitteltem auf Paketvermittelten Transport) und verschiedene Protokollkonverter von beispielsweise Email, Sprache und Fax (also RP spezifische und externe Formate), MCP 1-4. Die Daten werden hier empfangen, gespeichert, verarbeitet und weitergesendet. Dabei kann Dateneingabe gesammelt werden (z. B. Menügesteuerter Dienst), und Konvertierungen. Unterschieden wird dabei zwischen On-Line, Off-Line und Dienst-Aktivierungs Typen.

Der Data Packet Switch DPS übernimmt das Routing auf der Seite des Internet-Zugriffs. Das Internet Gateway IG enthält einen Nachrichtenspeicher UMS Unified Media Store. Dieser funktioniert wie ein Anrufbeantworter für den zugehörigen Teilnehmer und dessen Anschlußleitung.

### Abkürzungsverzeichnis

- CCF: Call Control Function
- CCSS: Centralized Client/Server Subnetwork
- CU: Conference Unit
- DAS: Dual Availabilty Subnetwork
- DES: Duplex Exchange Subnetwork
- DIRS: Distributed Information Retrieval Subnetwork
- DSFS: Distributed Store & Forward Subnetwork
- DSS1: Digital Subscriber Signalling System No. 1; EURO ISDN Signalisierung
- HLR: Home Location Register
- INAP: Intelligent Network Application Part
- IP: Intelligent Peripheral
- ITU: International Telecommunications Union
- MAP: Mobile Application Part
- MN: Mobile Network
- RCI: RP Control Interface
- RP: Resource Platform
- SCF: Service Control Function, Dienstesteuerungsfunktion
- SCI: Switch Control Interface
- SCP: Service Control Point
- SDF: Service Data Function, Dienstdatenbankfunktion
- SMF: Service Management Function
- SN: Service Node
- SNC: Service Node Control
- SRF: Special Resource Function, Funktion für besondere Ressourcen,
- SSF: Service Switching Function, Dienstzugriffsfunktion
- SSP: Service Switching Point
- VLR: Visitor Location Register

### Literaturverzeichnis:

- Q.1214: ITU Recommendation Q.1214
Distributed Functional Plane for Intelligent Network CS-1 (10/95)

## Patentansprüche

1. Netzelement für ein intelligentes Telekommunikationsnetz, mit.
- mindestens einer Schnittstelle zum Zugriff auf andere Netzelemente in diesem Telekommunikationsnetz,
- Funktionen zur Dienstesteuerung (SCF, SNC),
- Funktionen zum Dienstezugriff (SSF),
- Funktionen für besondere Ressourcen (SRF, RP), und
- Funktionen für Verwaltung und Zugriff auf eine Dienstdatenbank (SDF),
wobei diese Funktionen geeignet sind, während der Betriebszeit in dem Netzelement bedarfsgesteuert über die mindestens eine Schnittstelle aktiviert und deaktiviert zu werden.

2. Netzelement nach Patentanspruch 1,
**dadurch gekennzeichnet, daß**
es geeignet ist, als Makler (Ag) eine Verteilung von Funktions-Modulen mit anderen Netzelementen in dem Telekommunikationsnetz zu verhandeln.

3. Netzelement nach Patentanspruch 1,
**dadurch gekennzeichnet, daß**
es geeignet ist, eine Verteilung von Funktions-Modulen durch Anforderung an andere Netzelemente in diesem Telekommunikationsnetz zu steuern.

4. Netzelement nach Patentanspruch 1,
**dadurch gekennzeichnet, daß**
dieses Netzelement in verschiedenen Operationsmodi arbeiten kann.

5. Netzelement nach Patentanspruch 4,
**dadurch gekennzeichnet, daß**
es sich um folgende Operationsmodi handelt:
unabhängig (Sv) und dazu gehörend
- abhängig (Cl), sowie
- autonom (Ag).

6. Intelligentes Telekommunikationsnetz mit einem Netzelement, wobei das Netzelement mindestens eine der folgenden Funktionen enthält:
- Funktionen zur Dienstesteuerung (SCF, SNC),
- Funktionen zum Dienstezugriff (SSF),
- Funktionen für besondere Ressourcen (SRF, RP), Funktionen für Verwaltung und Zugriff auf eine Dienstdatenbank (SDF), und
- mindestens eine Schnittstelle zum Zugriff auf andere Netzelemente in diesem Telekommunikationsnetz,
**dadurch gekennzeichnet, daß**
diese Funktionen geeignet sind, während der Betriebszeit in dem Netzelement bedarfsgesteuert über die mindestens eine Schnittstelle vollständig an andere Netzelemente übertragen oder von diesen empfangen zu werden, um dann in dem empfangenden anderen Netzelement ausgeführt zu werden.

7. Intelligentes Telekommunikationsnetz nach Patentanspruch 6,
**dadurch gekennzeichnet, daß**
das Netzelement geeignet ist, als Makler (Ag) eine Verteilung von Funktions-Modulen mit anderen Netzelementen in dem Telekommunikationsnetz zu verhandeln.

8. Intelligentes Telekommunikationsnetz nach Patentanspruch 6,
**dadurch gekennzeichnet, daß**
das Netzelement geeignet ist, eine Verteilung von Funktions-Modulen durch Anforderung an andere Netzelemente in diesem Telekommunikationsnetz zu steuern.

9. Intelligentes Telekommunikationsnetz nach Patentanspruch 6,
**dadurch gekennzeichnet, daß**
das Netzelement in verschiedenen Operationsmodi arbeiten kann.

10. Intelligentes Telekommunikationsnetz nach Patentanspruch 9,
**dadurch gekennzeichnet, daß**
es sich um folgende Operationsmodi handelt:
- unabhängig (Sv) und dazu gehörend
- abhängig (Cl), sowie
- autonom (Ag).

## Claims

1. Network element for an intelligent telecommunications network, with:
- at least one interface to access other network elements in this telecommunications network,
- Functions for service control (SCF, SNC),
- Functions for service access (SSF),
- Functions for special resources (SRF, RP), and
- Functions for administration and for accessing a service database (SDF),
whereby these functions are suitable for being activated and de-activated during operating time in the network element in a requirement-controlled manner via the at least one interface.

2. Network element according to patent claim 1,
**characterized in that** it is suitable, as an agent (Ag), for negotiating a distribution of functional modules with other network elements in the telecommunications network.

3. Network element according to patent claim 1,
**characterized in that** it is suitable for controlling a distribution of functional modules by prompting other network elements in this telecommunications network.

4. Network element according to patent claim 1,
**characterized in that** this network element can operate in different operating modes.

5. Network element according to patent claim 4,
**characterized in that** the operating modes are as follows:
- independent (Sv) and, associated therewith,
- dependent (Cl), and
- autonomous (Ag).

6. Intelligent telecommunications network with a network element, whereby the network element contains at least one of the following functions:
- Functions for service control (SCF, SNC),
- Functions for service access (SSF),
- Functions for special resources (SRF, RP),
- Functions for administration and for accessing a service database (SDF), and
- at least one interface to access other network elements in this telecommunications network,
**characterized in that**, in this network element, these functions are suitable for being completely transmitted during the operating time via the at least one interface to other network elements, or for being received by said network elements, in a requirement-controlled manner, in order to then be performed in the receiving other network element.

7. Intelligent telecommunications network according to patent claim 6,
**characterized in that** the network element is suitable, as an agent (Ag), for negotiating a distribution of functional modules with other network elements in the telecommunications network.

8. Intelligent telecommunications network according to patent claim 6,
**characterized in that** the network element is suitable for controlling a distribution of functional modules by prompting other network elements in this telecommunications network.

9. Intelligent telecommunications network according to patent claim 6,
**characterized in that** the network element can operate in different operating modes.

10. Intelligent telecommunications network according to patent claim 9,
**characterized in that** the operating modes are as follows:
- independent (Sv) and, associated therewith,
- dependent (C1), and
- autonomous (Ag).

## Revendications

1. Elément de réseau pour un réseau de télécommunication intelligent, comportant :
- au moins une interface pour l'accès à d'autres éléments de réseau dans ce réseau de télécommunication,
- des fonctions (SCF, SNC) pour la commande de services,
- des fonctions (SSF) pour l'accès aux services,
- des fonctions (SRF, RP) pour des ressources particulières, et
- des fonctions (SDF) pour la gestion et l'accès à une base de données de services,
ces fonctions étant susceptibles d'être activées et désactivées pendant le temps d'exploitation dans l'élément de réseau, par une commande déclenchée lorsque c'est nécessaire, par l'intermédiaire d'au moins une interface.

2. Elément de réseau selon la revendication 1,
**caractérisé par le fait que**, en tant qu'agent (Ag), il peut négocier une répartition de modules de fonctions avec d'autres éléments de réseau dans le réseau de télécommunication.

3. Elément de réseau selon la revendication 1,
**caractérisé par le fait qu'**il peut commander une répartition de modules de fonctions par une demande à d'autres éléments de réseau dans ce réseau de télécommunication.

4. Elément de réseau selon la revendication 1,
**caractérisé par le fait que** cet élément de réseau peut travailler dans différents modes opérationnels.

5. Elément de réseau selon la revendication 4,
**caractérisé par le fait qu'**il s'agit des modes opérationnels suivants :
- indépendant (Sv) et, relevant de celui-ci,
- dépendant (Cl), ainsi que
- autonome (Ag).

6. Réseau de télécommunication intelligent comportant un élément de réseau, l'élément de réseau contenant au moins l'une des fonctions suivantes :
- fonctions (SCF, SNC) pour la commande de services,
- fonctions (SSF) pour l'accès aux services,
- fonctions (SRF, RP) pour des ressources particulières,
- fonctions (SDF) pour la gestion et l'accès à une base de données de services, et
- au moins une interface pour l'accès à d'autres éléments de réseau dans ce réseau de télécommunication,
**caractérisé par le fait que** ces fonctions sont susceptibles, pendant le temps d'exploitation dans l'élément de réseau, par une commande lorsque c'est nécessaire, d'être transmises complètement à d'autres éléments de réseau ou d'être reçues de ceux-ci, et ce par l'intermédiaire de la ou des interfaces, afin d'être ensuite exécutées dans l'autre élément de réseau récepteur.

7. Réseau de télécommunication intelligent selon la revendication 6,
**caractérisé par le fait que** l'élément de réseau, en tant qu'agent (Ag), peut négocier une répartition de modules de fonctions avec d'autres éléments de réseau dans le réseau de télécommunication.

8. Réseau de télécommunication intelligent selon la revendication 6,
**caractérisé par le fait que** l'élément de réseau peut commander une répartition de modules de fonctions par une demande à d'autres éléments de réseau dans ce réseau de télécommunication.

9. Réseau de télécommunication intelligent selon la revendication 6,
**caractérisé par le fait que** l'élément de réseau peut travailler dans différents modes opérationnels.

10. Réseau de télécommunication intelligent selon la revendication 9,
**caractérisé par le fait qu'**il s'agit des modes opérationnels suivants :
- indépendant (Sv) et, relevant de celui-ci,
- dépendant (Cl), ainsi que
- autonome (Ag).
